# EUROPEAN PATENT SPECIFICATION

(11) **EP 3 225 898 B1**
(45) Date of publication and mention of the grant of the patent: **28.04.2021**
(21) Application number: 14906961.9
(22) Date of filing: 28.11.2014
(51) Int. Cl.: F16M 11/04, F16M 11/12, F16M 11/18, G03B 17/56, F16M 11/20, F16M 13/04, F16M 11/24

(54) **TRANSLATION AXIS ASSEMBLY AND HEAD USING SAME**
TRANSLATIONSACHSENANORDNUNG UND KOPF DAMIT
ENSEMBLE AXE DE TRANSLATION ET TÊTE UTILISANT CET ENSEMBLE

(43) Date of publication of application: 04.10.2017
(73) Proprietor: SZ DJI Technology Co., Ltd., Shenzhen, Guangdong 518057 (CN)
(72) Inventor: GUO, Shanguang, Shenzhen Guangdong 518057 (CN); ZHAO, Yanchong, Shenzhen Guangdong 518057 (CN)
(74) Representative: Goddar, Heinz J.
(86) International application number: PCT/CN2014/092539
(87) International publication number: WO 2016/082202

(56) References cited:
- CN-U- 201 561 008
- CN-U- 203 907 156
- CN-U- 203 930 299
- CN-U- 203 930 299
- CN-U- 203 963 419
- CN-U- 203 963 419
- US-A1- 2005 041 966
- US-A1- 2005 185 089
- US-B1- 6 434 329

## Description

### TECHNICAL FIELD

The present invention relates to the field of capturing apparatuses, in particular to a translation axis assembly and a gimbal platform using same.

### BACKGROUND OF THE DISCLOSURE

A gimbal platform is a supporting worktable for mounting a camera, with the camera arranged on the gimbal platform. A camera lens can be adjusted by adjusting the gimbal platform to achieve accurate capturing (e.g., video or image capturing) of a target. The gimbal platform is compatible with many different types of cameras or lenses, and an axial center of gravity of the gimbal platform can be adjusted. However, since existing structures for adjusting the center of gravity adjusts the center of gravity using a relative displacement of the structure of the gimbal platform, and since most structural members bear a load, a static frictional force between structural members is large, and relative movements are difficult. Moreover, even a very small relative displacement significantly influences the center of gravity, making it difficult to adjust the center of gravity Document CN 203 930 299 U discloses a similar translation axis assembly.

### SUMMARY OF THE DISCLOSURE

An objective of the present disclosure is to provide an adjustable translation axis assembly that balances the center of gravity, and a gimbal platform using same.

An embodiment of the present disclosure is achieved as follows: a translation axis assembly, comprising a supporting arm, a connecting plate, and a center-of-gravity adjusting device connected between the supporting arm and the connecting plate. The position of the connecting plate on the supporting arm is adjusted by the center-of-gravity adjusting device, so as to adjust the center of gravity of the translation axis assembly. The center-of-gravity adjusting device comprises a locking and attachment assembly that causes the supporting arm and the connecting plate to be in a loose fit when adjusting the center of gravity, and that causes the connecting plate and the supporting arm to be held tightly after the adjustment of center of gravity.

The supporting arm is provided with a penetration hole connecting the connecting plate, and a locking hole in communication with the penetration hole, and after the adjustment of the center of gravity, the locking and attachment assembly reduces the size of the locking hole to hold the supporting arm tightly in the penetration hole.

The locking and attachment assembly comprises a pad, a first wrench, a pin, and a fixing bolt, the pad is provided with a via hole, the pad is arranged on the side of the supporting arm close to the locking hole, the pin is arranged in a first through-hole in the first wrench, the first wrench rotates relative to the pin, the pin is provided with a second through-hole, and the fixing bolt passes through the second through-hole and the via hole sequentially and then comes into a threaded connection with a threaded hole provided in the connecting plate.

The pad is made of polyoxymethylene.

The threaded hole in the connecting plate runs through the locking hole.

The center-of-gravity adjusting device further comprises a lead screw and a moving member rotatably and movably arranged on the lead screw, the moving member is received in the penetration hole and is fixedly connected to the supporting arm, the connecting plate is arranged in the moving member, a bearing is arranged in the connecting plate, a threaded hole is provided on the moving member, the lead screw is in a threaded connection with the threaded hole, and one end of the lead screw is sheathed in the bearing.

The penetration hole comprises a first receiving hole of a rectangular shape and a second receiving hole of a circular arc shape, the first receiving hole is in communication with the second receiving hole; and the connecting plate comprises a first guide part and a second guide part connected to the first guide part, the first guide part extending to the outer side surface of the second guide part and protruding relative to the second guide part, the second guide part is matched with the second receiving hole, the moving member is matched with the first receiving hole, and the moving member is fixedly arranged in the first receiving hole.

The moving member comprises a first moving part, a second moving part connected to the first moving part, and a guide part, the second moving part extending to both sides of the first moving part, the second moving part clamps the first guide part, and the threaded hole in the moving member is provided at the guide part.

A central axis of the threaded hole is substantially parallel to a lengthwise direction of the lead screw.

The connecting plate comprises a first bottom surface which is in contact with the supporting arm and the first bottom surface is provided with a receiving groove; the connecting plate comprises a first outer side wall which is provided with a shaft hole, the bearing is fixed in the receiving groove, and the lead screw passes through the shaft hole and is sheathed in the bearing of the receiving groove.

The end of the lead screw closer to the first outer side wall is provided with a rotary handle.

The center-of-gravity adjusting device further comprises a fixed plate which is fixed to the first outer side wall, the size of the fixed plate is larger than the size of the first outer side wall.

The end face of the fixed plate further away from the connecting plate is provided with a groove, the bottom of the groove is provided with a through-hole for the lead screw to pass through, and the rotary handle is partially received in the groove and can rotate in the groove.

The translation axis assembly further comprises a driving device and a battery, the driving device is arranged at one end of the supporting arm, and the battery is arranged on the supporting arm.

The embodiment of the present disclosure is achieved as follows: a gimbal platform for carrying an imaging device, comprising a pitch axis assembly, a roll axis assembly in pivot connection with the pitch axis assembly and that drives the rotation of the pitch axis assembly, and a translation axis assembly in pivot connection with the roll axis assembly and that drives the rotation of the roll axis assembly, the translation axis assembly comprising a supporting arm and a connecting plate, the translation axis assembly further comprising a center-of-gravity adjusting device connected between the supporting arm and the connecting plate, the position of the supporting arm on the connecting plate being adjusted by the center-of-gravity adjusting device, so as to adjust the center of gravity of the translation axis assembly, the center-of-gravity adjusting device comprising a locking and attachment assembly that causes the supporting arm and the connecting plate to be in a loose fit when adjusting the center of gravity, and that causes the connecting plate and the supporting arm to be held tightly after the adjustment of center of gravity.

The gimbal platform further comprises a support assembly movably arranged at the pitch axis assembly and carrying the imaging device.

The pitch axis assembly comprises two first pillars, two guide posts and two first position-locking devices, the guide posts is substantially perpendicular to the two first pillars, and the two guide posts move in the lengthwise direction of the first pillars by the first position-locking devices.

The first position-locking device comprises a collar which is provided with a snapping hole and two receiving holes respectively arranged on two sides of the snapping hole, the axial direction of the snapping hole is substantially perpendicular to the axial direction of the receiving hole, the shape and size of the snapping hole correspond to the shape and size of the first pillar, the two first pillars are respectively sheathed in the snapping hole, and each of the receiving holes receives one end of the guide post, such that the two guide posts are arranged substantially parallel to each other.

The first position-locking devices further comprise a locking and attachment member, and the mounting positions of the two guide posts on the first pillars are adjusted by releasing or tightening the locking and attachment member.

The support assembly comprises two first adapters slidably arranged on the guide posts, a mounting plate, and a fastening device, the mounting plate is fixed to the first adapters, the support plate is movably arranged on the mounting plate, the fastening device is arranged at one side of the mounting plate, and the fastening device fixes the support plate to the mounting plate.

Each of the first adapters comprises a first pressing block and a second pressing block arranged oppositely, two circular slots are formed between the first pressing block and the second pressing block, the guide posts are inserted into the circular slots, the first pressing block and the second pressing block together lock in a first screw; the first adapters are fixed on the guide posts when the first screw is locked, and the first adapters slide on the guide posts in a lengthwise direction of the guide posts when the first screw is released.

A wrench is fixedly arranged on a nut of the first screw.

The roll axis assembly comprises a first supporting arm, a second supporting arm arranged symmetrically to the first supporting arm, a connecting arm connecting the first supporting arm and second supporting arm, and a first driving device, a motor rotary shaft of the first driving device is fixedly connected to a through-hole of one of the first pillars and driving the rotation of the first pillar so as to drive the rotation of the pitch axis assembly, the axial direction of the motor rotary shaft of the first driving device is substantially perpendicular to the lengthwise direction of the second supporting arm.

The first supporting arm, connecting arm and second supporting arm are integrally formed.

The translation axis assembly further comprises a second driving device which is arranged at one end of the supporting arm, the penetration hole is provided at the other end of the supporting arm, and a rotary shaft of the second driving device is fixed in the center of the connecting arm and driving the rotation of the roll axis assembly.

The gimbal platform further comprises a driving part and a holding part, the driving part is a brushless motor, with a rotor assembly thereof connected to the connecting plate and a stator assembly thereof fixed in the holding part, and the driving part drives the rotation of the translation axis assembly.

The holding part is in the shape of a bent rod, the holding part comprises a first connecting part, a first supporting part and a hand-held part, the first supporting part is a rod member, the first connecting part is fixedly connected to the geometrical center of the first supporting part, and the first connecting part is connected to the driving part.

The hand-held part comprises two cylindrical handgrips, and the hand-held part is fixed to both ends of the first supporting part.

The holding part is fixedly arranged with a handle which is fixed to one side of the first supporting part and opposite the first connecting part.

The supporting arm is provided with a penetration hole connecting the connecting plate, and a locking hole in communication with the penetration hole, and after the adjustment of the center of gravity, the locking and attachment assembly reduces the size of the locking hole to hold the supporting arm tightly in the penetration hole.

The locking and attachment assembly comprises a pad, a first wrench, a pin, and a fixing bolt, the pad is provided with a via hole, the pad is arranged on the side of the supporting arm close to the locking hole, the pin is arranged in a first through-hole in the first wrench, the first wrench rotates relative to the pin, the pin is provided with a second through-hole, and the fixing bolt passes through the second through-hole and the via hole sequentially and then comes into a threaded connection with a threaded hole provided in the connecting plate.

The pad is made of polyoxymethylene.

The threaded hole in the connecting plate runs through the locking hole.

The center-of-gravity adjusting device further comprises a lead screw and a moving member rotatably and movably arranged on the lead screw, the moving member is received in the penetration hole and fixedly connected to the supporting arm, the connecting plate is arranged in the moving member, a bearing is arranged in the connecting plate, a threaded hole is provided on the moving member, the lead screw is in a threaded connection with the threaded hole in the moving member, and one end of the lead screw is sheathed in the bearing.

The penetration hole comprises a first receiving hole of a rectangular shape and a second receiving hole of a circular arc shape, the first receiving hole is in communication with the second receiving hole; the connecting plate comprises a first guide part and a second guide part connected to the first guide part, the first guide part extends on the outer side surface of the second guide part and protrudes relative to the second guide part, the second guide part is matched with the second receiving hole, the moving member is matched with the first receiving hole, and the moving member is fixedly arranged in the first receiving hole.

The moving member comprises a first moving part, a second moving part connected to the first moving part, and a guide part; the second moving part extends on both sides of the first moving part, the second moving part clamps the first guide part, and the threaded hole in the moving member is provided at the guide part.

A central axis of the threaded hole in the moving member is substantially parallel to a lengthwise direction of the lead screw.

The connecting plate comprises a first bottom surface which is in contact with the supporting arm and the first bottom surface is provided with a receiving groove; the connecting plate comprises a first outer side wall which is provided with a shaft hole, the bearing is fixed in the receiving groove, and the lead screw passes through the shaft hole and is sheathed in the bearing of the receiving groove.

The end of the lead screw closer to the first outer side wall is provided with a rotary handle.

The center-of-gravity adjusting device further comprises a fixed plate which is fixed to the first outer side wall, the size of the fixed plate is larger than the size of the first outer side wall.

The end face of the fixed plate further away from the connecting plate is provided with a groove, the bottom of the groove is provided with a through-hole for the lead screw to pass through, and the rotary handle is partially received in the groove and can rotate in the groove.

The translation axis assembly further comprises a battery which is arranged on the supporting arm.

With respect to the prior art, the gimbal platform of the present disclosure further comprises a center-of-gravity adjusting unit for adjusting the position of the supporting arm on the connecting plate, to adjust the center of gravity of the translation axis assembly. The gimbal platform of the present disclosure can adjust the center of gravity of the gimbal platform by the center-of-gravity adjusting device.

### DESCRIPTION OF THE DRAWINGS

Fig. 1 is a perspective assembled schematic diagram of a gimbal platform, consistent with exemplary embodiments of the present disclosure.
Fig. 2 is a perspective assembled schematic diagram of the gimbal platform in Fig. 1 from another viewing angle.
Fig. 3 is a perspective assembled schematic diagram of a translation axis assembly in Fig. 2.
Fig. 4 is a perspective exploded schematic diagram of the translation axis assembly in Fig. 3 from another viewing angle.
Fig. 5 is a perspective exploded schematic diagram of the translation axis assembly in Fig. 4.
Fig. 6 is a perspective exploded schematic diagram of the translation axis assembly in Fig. 5 from another viewing angle.
Fig. 7 is a diagram of the gimbal platform in Fig. 1 in use.

### DETAILED DESCRIPTION OF THE EMBODIMENTS

The technical solutions in the embodiments of the present disclosure are hereinafter described clearly and completely with reference to the accompanying drawings in the embodiments of the present disclosure. Evidently, the described embodiments are only some embodiments rather than all embodiments of the present disclosure. All other embodiments obtained by a person of ordinary skill in the art based on the embodiments of the present disclosure without creative efforts shall fall within the scope of protection of the present disclosure.

It should be noted that, when a component is known to be "fixed to" another component, it can be fixed directly on another component, or via an intermediate component. When a component is considered to be "connected" to another component, it can be directly connected to via another component or an intermediate component.

Unless otherwise defined, all technical and scientific terms used herein have the same meaning as commonly understood by one of ordinary skill in the art to which this disclosure belongs. The terms used in the description of the present disclosure are for the purpose of describing particular embodiments and are not intended to limit the present disclosure. The term "and/or" used herein includes any and all combinations of one or more of the associated listed items.

The implementation of the present disclosure is described in detail below with reference to exemplary embodiments.

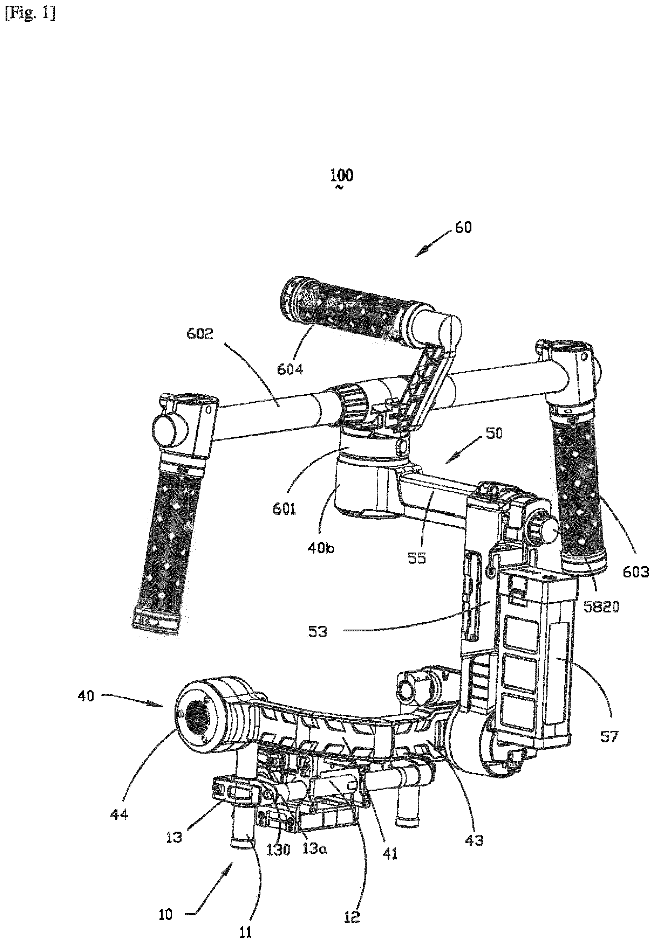

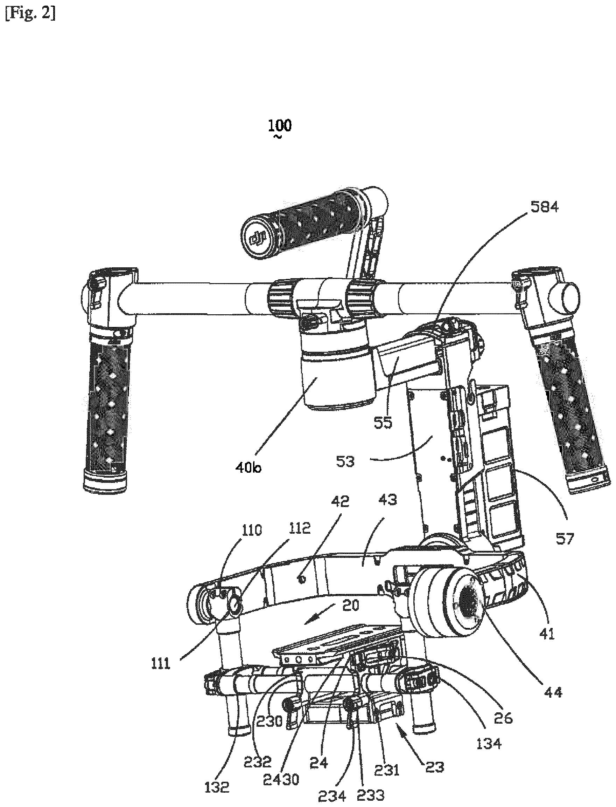

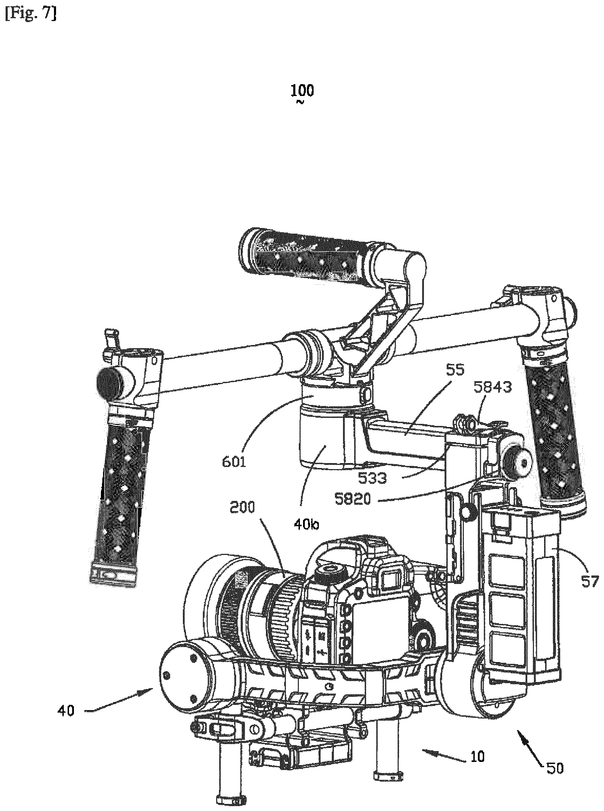

Referring to Figs. 1 and 2 in conjunction, the present disclosure provides a gimbal platform 100 for carrying an imaging device 200 (as shown in Fig. 7). The imaging device 200 may be a photo camera, a video camera, or a lens.

The gimbal platform 100 comprises a pitch axis assembly 10, a support assembly 20 movably arranged on the pitch axis assembly 10, a roll axis assembly 40 in pivot connection with the pitch axis assembly 10 and capable of driving the rotation of the pitch axis assembly 10, a translation axis assembly 50 in pivot connection with the roll axis assembly 40 and capable of driving the rotation of the roll axis assembly 40, a driving part 40b for driving the rotation of the translation axis assembly 50, and a holding part 60.

The pitch axis assembly 10 comprises two first pillars 11, two guide posts 12, and two first position-locking devices 13. The two guide posts 12 are arranged perpendicular to the two first pillars 11. The two guide posts 12 can move in the lengthwise direction of the first pillars 11 by the first position-locking devices 13, and can fix the two guide posts 12 to any position on the first pillars 11 by the first position-locking devices 13.

For example, the first pillars 11 are of a cylindrical shape, and each of the first pillars 11 comprises a connecting end 110. The connecting end 110 is provided with a through-hole 111. In one embodiment, the axial direction of the through-hole 111 is substantially perpendicular to the lengthwise direction of the first pillars 11. A rotary shaft 112 is arranged in one of the through-holes 111, and the first pillars 11 may also be of another shape.

In one embodiment, both of the guide posts 12 are of a cylindrical shape, and the guide posts 12 may also be of another shape.

The first position-locking devices 13 comprise a collar 13a, and a locking and attachment member 134. The collar 13a is provided with a snapping hole 130, and two receiving holes 132 respectively arranged at two sides of the snapping hole 130. The axial direction of the snapping hole 130 is substantially perpendicular to the axial direction of the receiving holes 132. The shape and size of the snapping hole 130 correspond to the shape and size of the first pillars 11. The two first pillars 11 are respectively sheathed in one of the snapping holes 130. Each of the receiving holes 132 is used for receiving one end of the guide posts 12, such that the two guide posts 12 are arranged substantially parallel to each other.

The locking and attachment member 134 is used for locking and attaching the first position-locking devices 13 to any position on the first pillars 11. For example, the locking and attachment member 134 is a toggle clip made of a metal material. The locking and attachment member 134 can apply pressure to the collar 13a, so that the snapping hole 130 of the collar 13a decreases to clamp down the first pillars 11. In one embodiment, the mounting positions of the two guide posts 12 on the first pillars 11 can be adjusted by releasing or tightening the locking and attachment member 134.

The support assembly 20 comprises two first adapters 23 slidably arranged on the guide posts 12, a mounting plate 24, and a fastening device 26. The mounting plate 24 is fixed to the first adapters 23. In one embodiment, the mounting plate 24 is fixed to the first adapters 23 via bolts. The imaging device 200 is slidably arranged on the mounting plate 24. The fastening device 26 is arranged at one side of the mounting plate 24, and the fastening device 26 is used for locking the imaging device 200 to any position on the mounting plate 24.

To adjust sliding of the first adapters 23, each of the first adapters 23 comprises a first pressing block 231 and a second pressing block 232 arranged oppositely, two circular slots 230 are formed between the first pressing block 231 and the second pressing block 232, the guide posts 12 are inserted into the circular slots 230, and the first pressing block 231 and the second pressing block 232 together lock in a first screw 233. When the first screw 233 is tightly locked, the first adapters 23 are fixed to the guide posts 12; and when the first screw 233 is released, the first adapters 23 slide on the guide posts 12 in the lengthwise direction of the guide posts 12.

In one embodiment, a wrench 243 is arranged on a nut of the first screw 233, the wrench 243 extends in a direction perpendicular to the lengthwise direction of the first screw 233, and the first screw 233 can be locked by turning the wrench 243 to rotate in a direction, or can be released by turning the wrench 243 to rotate in the direction opposite to that for locking the first screw 233. Thus, sliding and fixing of the first adapters 23 can be further adjusted.

The mounting plate 24 is fixed to the second pressing block 232. The mounting plate 24 is provided with a first sliding groove 2430. In one embodiment, the first sliding groove 2430 is a dovetail sliding groove.

The roll axis assembly 40 comprises a first supporting arm 41, a second supporting arm 42 arranged symmetrically to the first supporting arm 41, a connecting arm 43 connecting the first supporting arm 41 and second supporting arm 42, and a first driving device 44.

In one embodiment, to reduce the number of parts of the assembly, improve the assembly technology, decrease the rotational resistance of the first driving device 44, and improve the rotation smoothness between the first driving device 44 and the roll axis assembly 40, the first supporting arm 41, connecting arm 43, and second supporting arm 42 are integrally formed by pressure casting with a magnesium-aluminium alloy.

In one embodiment, the first driving device 44 is a brushless motor, and the motor rotary shaft (not shown in the figure) of the first driving device 44 is fixedly connected to the through-hole 110 of one of the first pillars 11, and used for driving the rotation of the first pillars 11 to drive the rotation of the pitch axis assembly 10. In one embodiment, the axial direction of the motor rotary shaft of the first driving device 44 is substantially perpendicular to the lengthwise direction of the second supporting arm 42. The first driving device 44 drives the rotation of the pitch axis assembly 10 to adjust the capturing angle of the imaging device 200 and adjust the rotation speed in time to adapt to various pose positions.

The first driving device 44 may also be a brush electric machine or motor, and is not limited in this embodiment.

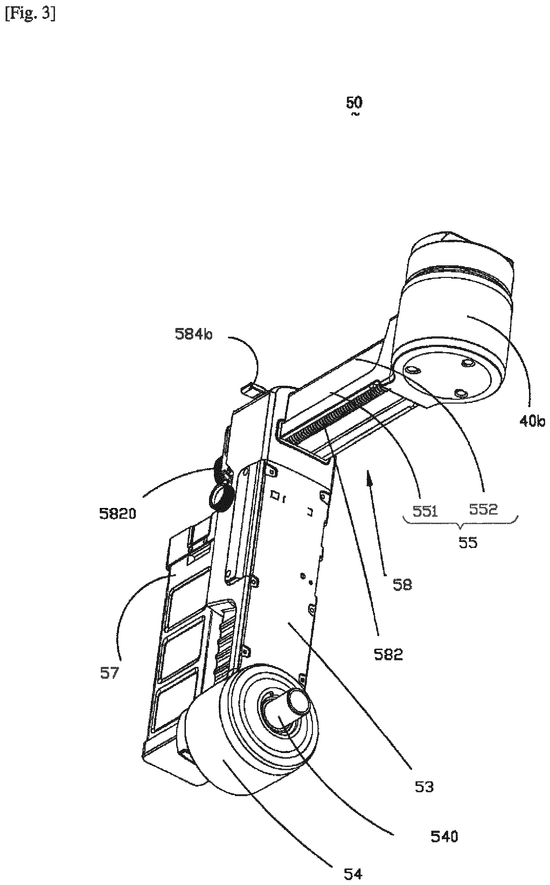

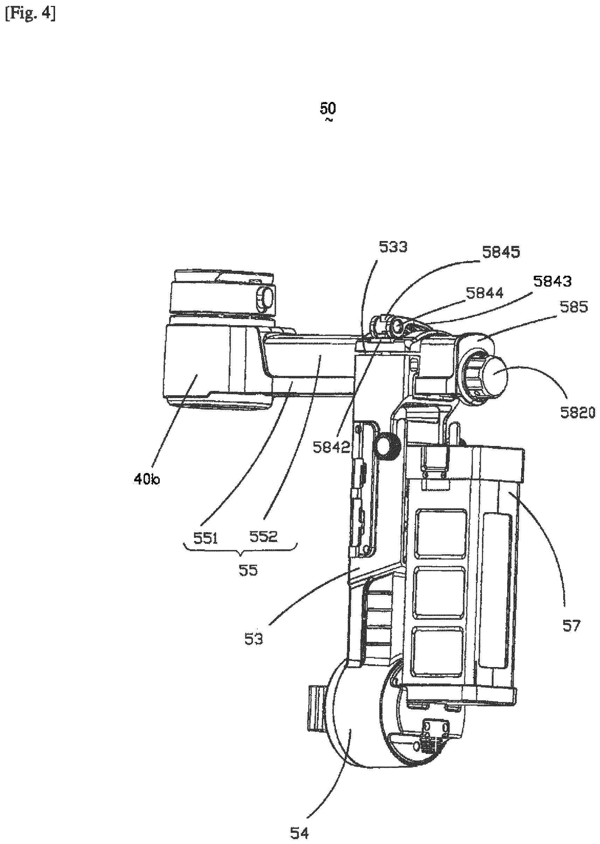

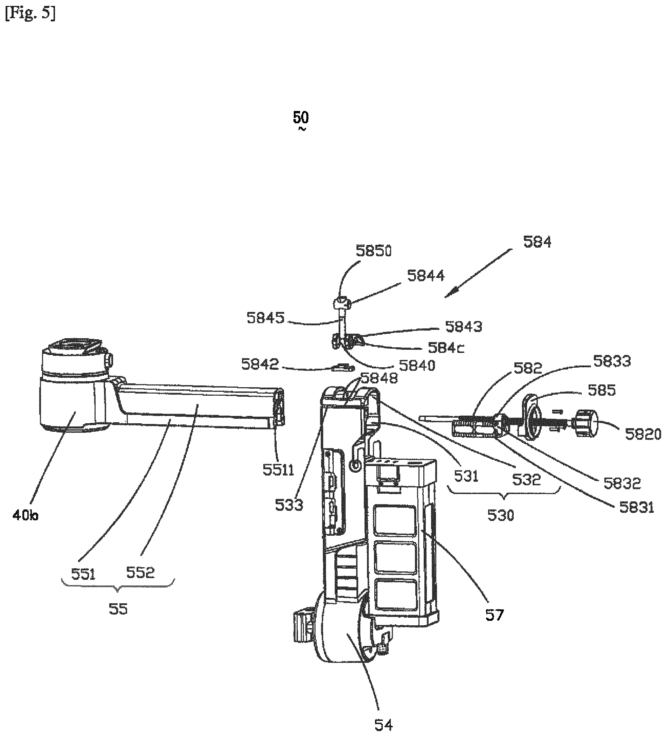

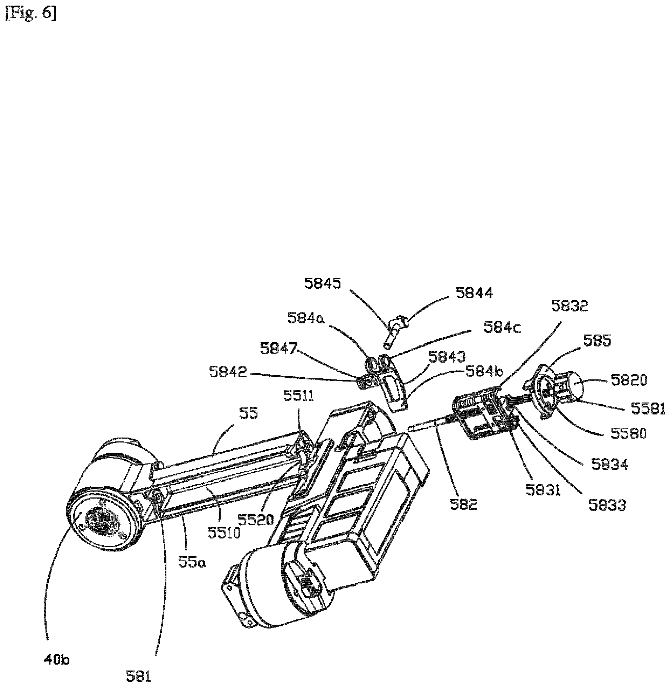

Referring to Figs. 3-6, the translation axis assembly 50 comprises a third supporting arm 53, a second driving device 54, a connecting plate 55, a battery 57, and a center-of-gravity adjusting device 58 arranged between the connecting plate 55 and the third supporting arm 53 and used for adjusting the position of the third supporting arm 53 on the connecting plate 55.

The second driving device 54 is arranged at one end of the third supporting arm 53. In one embodiment, the second driving device 54 is also a brushless motor, with a rotor assembly and a stator assembly thereof received directly in the third supporting arm 53, i.e., the third supporting arm 53 directly serves as a housing for receiving the rotor assembly and stator assembly of the second driving device 54 to obviate the need for an additional housing and save cost.

The other end of the third supporting arm 53 further away from the second driving device 54 is provided with a penetration hole 530. In one embodiment, the penetration hole 530 comprises a first receiving hole 531 of a rectangular shape and a second receiving hole 532 of a circular arc shape. The first receiving hole 531 is in communication with the second receiving hole 532. The first receiving hole 531 is close to the second driving device 54, while the second receiving hole 532 is further away from the second driving device 54. A locking hole 533 is provided on an outer side surface of the end of the third supporting arm 53 further away from the second driving device 54, and the locking hole 533 is in communication with the second receiving hole 532.

The battery 57 is arranged on the third supporting arm 53, and is used for providing electrical energy for the operation of the whole gimbal platform 100.

In some embodiments, the second driving device 54 can also be additionally provided with a housing, and when assembled, the housing receiving the rotor assembly and stator assembly is assembled onto the third supporting arm 53.

The second driving device 54 is used for driving the rotation of the roll axis assembly 40. For example, the rotary shaft 540 of the second driving device 54 is fixed in the center of the connecting arm 43 and is used for driving the rotation of the roll axis assembly 40.

The connecting plate 55 is connected to the end of the third supporting arm 53 further away from the roll axis assembly 40. The connecting plate 55 is substantially perpendicular to the third supporting arm 53, and is substantially parallel to the rotary shaft 540 of the second driving device 54. The connecting plate 55 comprises a first bottom surface 55a in contact with the third supporting arm 53. The first bottom surface 55a is provided with a receiving groove 5510. The connecting plate 55 comprises a first outer side wall 5511, and the first outer side wall 5511 is provided with a shaft hole 5520. In one embodiment, the connecting plate 55 comprises a first guide part 551 and a second guide part 552 connected to the first guide part 551. The first guide part 551 extends on the outer side surface of the second guide part 552, and protrudes relative to the second guide part 552. The first guide part 551 is of a rectangular shape. The second guide part 552 is matched with the second receiving hole 532, and the second guide part 552 is of a circular arc shape.

The shape and size of the penetration hole 30 may be designed according to practical requirements, and the shape and size of the connecting plate 55 match with the shape and size of the penetration hole 30, and are not limited in this embodiment.

The center-of-gravity adjusting device 58 comprises a bearing 581, a lead screw 582, a moving member 583 rotatably and movably arranged on the lead screw 582, and a locking and attachment assembly 584.

The bearing 581 is fixed in the receiving groove 5510. The axis of the bearing 581 is substantially parallel to and substantially perpendicular to the lengthwise direction of the third supporting arm 53. One end of the lead screw 582 passes through a shaft hole 5520 in the first outer side wall 5511, and is sheathed in a bearing 581 of the receiving groove 5510. In one embodiment, for facilitating the rotation of the lead screw 582, a rotary handle 5820 is provided at the end of the lead screw 582 close to the first outer side wall 5511, and the rotary handle 5820 is fixedly connected to the lead screw 582.

The shape and size of the moving member 583 are identical to the shape and size of the first receiving hole 531, i.e., the moving member 583 is matched with the first receiving hole 531. The moving member 583 is fixedly arranged in the first receiving hole 531. The moving member 583 comprises a first moving part 5831, a second moving part 5832 connected to the first moving part 5831, and a guide part 5833. The moving member 583 is fixedly connected to the third supporting arm 53, and for example, the first moving part 5831 is fixedly connected to the third supporting arm 53 via a bolt. The second moving part 5832 extends on both sides of the first moving part 5831, and the second moving part 5832 is used for clamping the first guide part 551. The guide part 5833 is provided with a threaded hole 5834, and the central axis of the threaded hole 5834 is substantially parallel to the lengthwise direction of the lead screw 582.

In other embodiments, the first moving part 5831 may also be fixedly connected to the third supporting arm 53 by welding or gluing.

In one embodiment, the center-of-gravity adjusting device 58 further comprises a fixed plate 585, and the fixed plate 585 is fixed to the first outer side wall 5511 of the connecting plate 55 via a bolt. A groove 5580 is provided on the end surface of the fixed plate 585 further away from the connecting plate 55, and a through-hole 5581 is provided in the bottom of the groove 5580. The rotary handle 5820 is partially received in the groove 5581 and can rotate in the groove 5581. The fixed plate 585 has a size larger than that of the first outer side wall 5511 to prevent the connecting plate 55 from separating from the penetration hole 530.

In some embodiments, in order to save materials, the fixed plate 585 may not be needed; or the fixed plate 585 is fixedly connected to the first outer side wall 5511 by gluing or welding.

For assembly, firstly the moving member 583 is fixedly arranged in the first receiving hole 531, then one end of the connecting plate 55 passes through the penetration hole 530, the second moving part 5832 of the moving member 583 clamps the first guide part 551, subsequently the fixed plate 585 is fixed to the first outer side wall 5511 of the connecting plate 55, then the rotary handle 5820 is fixedly connected to the lead screw 582, and finally the lead screw 582 passes through the through-hole 5581 of the fixed plate 585 and is in a threaded connection with the threaded hole 5834 of the moving member 583, so that one end of the lead screw 582 passes through the shaft hole 5520 and is sheathed in a bearing 581 of the receiving groove 5510.

The locking and attachment assembly 584 is arranged at the side of the third supporting arm 53 close to the locking hole 533, and the locking and attachment assembly 584 is used for locking and attaching the connecting plate 55 to the third supporting arm 53. For example, the locking and attachment assembly 584 comprises a pad 5842, a first wrench 5843, a pin 5844, and a fixing bolt 5845.

In one embodiment, the pad 5842 is made of polyoxymethylene, and a via hole 5847 is provided in the center of the pad 5842.

The first wrench 5843 comprises a rotating part 584a and a turning part 584b further away from the rotating part 584a. The rotating part 584a extends to the turning part 2632 and is provided with a first receiving part 5840, the first receiving part 5840 running through the rotating part 584a. A first through-hole 584c is provided in the wall of the rotating part 584a. The axial direction of the first through-hole 584c is parallel to the opening direction of the locking hole 533. The first receiving part 5840 is in communication with the first through-hole 584c.

The shape and size of the pin 5844 match with the shape and size of the first through-hole 584c. In one embodiment, a second through-hole 5850 is provided in the center of the pin 5844.

When assembling the locking and attachment assembly 58, firstly the pin 5844 is inserted into the first through-hole 584c, then the pad 5822 is placed at the side of the third supporting arm 53 closer to the locking hole 533, i.e., the pad 5822 is adjacent to the locking hole 533, and then the fixing bolt 5845 passes through the second through-hole 5850 and the via hole 5847 subsequently and then comes into a threaded connection with a threaded hole 5848 provided in the connecting plate 55, the threaded hole 5848 in the connecting plate 55 running through the locking hole 533. The rotating part 584a of the first wrench 5843 abuts against the pad 5842.

In some embodiments, the structure of the locking and attachment assembly 584 is not limited thereto, so long as the locking and attachment assembly 584 can separate the connecting plate 55 and the third supporting arm 53 from each other and can lock and attach the connecting plate 55 and the third supporting arm 53 to each other.

In one embodiment, the driving part 40b is also a brushless motor connected to the connecting plate 55 and the holding part 60, and the driving part 40b is used for driving the translation axis assembly 50 to rotate in 360° in a horizontal direction.

The holding part 60 is in the shape of a bent rod. For example, the holding part 60 comprises a first connecting part 601, a first supporting part 602, and a hand-held part 603. The first supporting part 602 is a rod member, and the first connecting part 601 is removably connected to a geometrical center of the first supporting part 602. The first connecting part 601 is connected to the driving part 40b.

The hand-held part 603 comprises two cylindrical handgrips, and the hand-held parts 603 are fixed to two ends of the first supporting part 602.

The holding part 60 is fixedly provided with a handle 604, and the handle 604 is fixed to one side of the first supporting part 602 relative to the first connecting part 601, so that the gimbal platform 100 can be effortlessly carried as desired when not in use. In other embodiments, the holding part 60 is also provided with a locking mechanism, to be fixed to a ladder to automatically move the gimbal platform 100 through mechanics.

Referring to Fig. 7, when in use, the imaging device 200 is fixedly arranged on the support assembly 20. To improve stability during capturing by the imaging device 200, by means of mechanical analysis, the center of gravity among the pitch axis assembly 10, the support assembly 20, the roll axis assembly 40, the translation axis assembly 50, and the imaging device 200 shall fall on a driving shaft of the driving part 40b, and the rotation of the translation axis assembly 50 to any angle will not produce a rotating torque, i.e., the translation axis assembly 50 will not swing back and forth, and at the same time, the stability of the imaging device 200 during rotation is improved.

When the center of gravity among the pitch axis assembly 10, the support assembly 20, the roll axis assembly 40, the translation axis assembly 50 and the imaging device 200 does not fall on the driving shaft of the driving part 40b, the center of gravity among the pitch axis assembly 10, the support assembly 20, the roll axis assembly 40, the translation axis assembly 50, and the imaging device 200 can be adjusted by the center-of-gravity adjusting device 58, so that the center of gravity of the pitch axis assembly 10, the support assembly 20, the roll axis assembly 40, the translation axis assembly 50, and the imaging device 200 falls on the driving shaft on the driving part 40b. For example, the turning part 584b of the first wrench 5843 is turned to release the locking and attachment assembly 584, so that the size of the locking hole 533 is enlarged to allow the connecting plate 55 and the third supporting arm 53 to be in a loose fit. The rotary handle 5820 is rotated, the lead screw 713 rotates in the threaded hole 5834 in the guide part 5833, and under the guide of the rectangular first guide part 551, the moving member 583 moves in the lengthwise direction of the lead screw 582, so that the center of gravity of the pitch axis assembly 10, the support assembly 20, the roll axis assembly 40, the translation axis assembly 50, and the imaging device 200 falls on the driving shaft of the driving part 40b. After the adjustment, the turning part 584b of the first wrench 5843 is turned, so that the size of the locking hole 533 is reduced under compression by the pad 5842, such that the locking and attachment assembly 584 tightly holds the connecting plate 55 and the third supporting arm 53, i.e., the connecting plate 55 is tightly held in the penetration hole 530, and therefore, the connecting plate 55 is tightly fitted to the third supporting arm 53 to achieve locking and attachment.

In some embodiments, the rotary handle 5820 may also be replaced with a driving motor which drives the rotation of the lead screw 582.

the structure of the center-of-gravity adjusting device 58 is not limited thereto, so long as the position of the third supporting arm 53 on the connecting plate 55 can be adjusted, so that the center of gravity of the pitch axis assembly 10, the support assembly 20, the roll axis assembly 40, the translation axis assembly 50, and the imaging device 200 falls on the driving shaft of the driving part 40b, but is not limited thereto in this embodiment.

The gimbal platform of the present disclosure comprises the center-of-gravity adjusting device for adjusting the position of the third supporting arm on the connecting plate. The gimbal platform can adjust the center of gravity of the gimbal platform by the center-of-gravity adjusting device.

The description above merely include some embodiments of the present disclosure and is not intended to limit the patent scope of the present disclosure.

## Claims

1. A translation axis assembly (50), comprising:
a supporting arm (41, 42, 53);
a connecting plate (55); and
a center-of-gravity adjusting device (58) connected between the supporting arm (41, 42, 53) and the connecting plate (55), wherein:
a position of the supporting arm (41, 42, 53) on the connecting plate (55) is adjusted by the center-of-gravity adjusting device (58) to adjust the center of gravity of the translation axis assembly (50);
the center-of-gravity adjusting device (58) comprises a locking and attachment assembly (584) that causes the supporting arm (41, 42, 53) and the connecting plate (55) to be in a loose fit during an adjustment of the center of gravity, and that causes the connecting plate (55) and the supporting arm (41, 42, 53) to hold tightly after the adjustment of the center of gravity,
wherein: the supporting arm (41, 42, 53) is provided with a penetration hole (530) connecting the connecting plate (55), and a locking hole (533) in communication with the penetration hole (530); **characterized in that**,
after the adjustment of the center of gravity, the
locking and attachment assembly (584) reduces the size of the locking hole (533) to hold the supporting arm (41, 42, 53) tightly in the penetration hole (530).

2. The translation axis assembly (50) of claim 1,
wherein the center-of-gravity adjusting device (58) is configured to release the locking and attachment assembly (584), so that the size of the locking hole (533) is enlarged to allow the connecting plate (55) and the supporting arm (41, 42, 53) to be in a loose fit.

3. The translation axis assembly (50) of claim 1, wherein the locking and attachment assembly (584) comprises a pad (5841, 42, 53), a first wrench (5843), a pin (5844), and a fixing bolt (5845); the pad (5841, 42, 53) is provided with a via hole (5847); the pad (5841, 42, 53) is arranged on the side of the supporting arm (41, 42, 53) close to the locking hole (533); the pin (5844) is arranged in a first through-hole in the first wrench (5843); the first wrench (5843) rotates relative to the pin (5844); the pin (5844) is provided with a second through-hole (5850); and the fixing bolt (5845) passes through the second through-hole (5850) and the via hole (5847) sequentially and then comes into a threaded connection with a threaded hole (5848) provided in the connecting plate (55),
wherein preferably the pad (5841, 42, 53) is made of polyoxymethylene,
or wherein preferably the threaded hole (5848) in the connecting plate (55) runs through the locking hole (533).

4. The translation axis assembly (50) of claim 1, wherein: the center-of-gravity adjusting device (58) further comprises a lead screw (582) and a moving member (583) rotatably and movably arranged on the lead screw (582); the moving member (583) is received in the penetration hole (530) and fixedly connected to the supporting arm (41, 42, 53); the connecting plate (55) is arranged in the moving member (583); a bearing (581) is arranged in the connecting plate (55); a threaded hole (5848) is provided on the moving member (583); the lead screw (582) is in a threaded connection with the threaded hole (5848) in the moving member (583); and one end of the lead screw (582) is sheathed in the bearing (581).

5. The translation axis assembly (50) of claim 4, wherein: the penetration hole (530) comprises a first receiving hole (531) of a rectangular shape and a second receiving hole (532) of a circular arc shape; the first receiving hole (531) is in communication with the second receiving hole (532); the connecting plate (55) comprises a first guide part (551) and a second guide part (552) connected to the first guide part (551); the first guide part (551) extends on an outer side surface of the second guide part (552) and protrudes relative to the second guide part (552); the second guide part (552) is matched with the second receiving hole (532); the moving member (583) is matched with the first receiving hole (531); and the moving member (583) is fixedly arranged in the first receiving hole (531).

6. The translation axis assembly (50) of claim 5, wherein: the moving member (583) comprises a first moving part (5831), a second moving part (5832) connected to the first moving part (5831), and a guide part (5833); the second moving part (5832) extends on both sides of the first moving part (5831); the second moving part (5832) clamps the first guide part (551); and the threaded hole (5848) in the moving member (583) is provided at the guide part (5833),
wherein further preferably a central axis of the threaded hole (5848) in the moving member (583) is substantially parallel to a lengthwise direction of the lead screw (582).

7. The translation axis assembly (50) of claim 1, wherein: the translation axis assembly (50) further comprises a driving device (44, 54) and a battery (57); the driving device (44, 54) is arranged at one end of the supporting arm (41, 42, 53); and the battery (57) is arranged on the supporting arm (41, 42, 53),
wherein preferably a stator assembly of the driving device (44, 54) is directly received in the supporting arm (41, 42, 53).

8. A gimbal platform (100) for carrying an imaging device (200), the gimbal platform (100) comprising: a pitch axis assembly (10); a roll axis assembly (40) in pivot connection with the pitch axis assembly (10) and that drives the rotation of the pitch axis assembly (10); and a translation axis assembly (50) according to one of the preceding claims in pivot connection with the roll axis assembly (40) and that drives the rotation of the roll axis assembly (40), the translation axis assembly (50).

9. The gimbal platform (100) of claim 8, wherein the gimbal platform (100) further comprises a support assembly (20) movably arranged at the pitch axis assembly (10) and carrying the imaging device (200).

10. The gimbal platform (100) of claim 8, wherein the pitch axis assembly (10) comprises two first pillars (11), two guide posts (12), and two first position-locking devices (13); the guide posts (12) are substantially perpendicular to the two first pillars (11); and the two guide posts (12) move in the lengthwise direction of the first pillars (11) by the first position-locking devices (13).

11. The gimbal platform (100) of claim 10, wherein: the first position-locking device (13) comprises a collar (13a) which is provided with a snapping hole (130) and two receiving holes (132) respectively arranged on two sides of the snapping hole (130); the axial direction of the snapping hole (130) is substantially perpendicular to the axial direction of the receiving hole (132); the shape and size of the snapping hole (130) correspond to the shape and size of the first pillar (11); the two first pillars (11) are respectively sheathed in the snapping hole (130); and each of the receiving holes (132) receives one end of the guide post (12), such that the two guide posts (12) are arranged substantially parallel to each other,
wherein further preferably:
the first position-locking devices (13) further comprise a locking and attachment member (134); and the mounting positions of the two guide posts (12) on the first pillars (11) are adjusted by releasing or tightening the locking and attachment member (134).

12. The gimbal platform (100) of claim 9, wherein: the support assembly (20) comprises two first adapters (23) slidably arranged on the guide posts (12), a mounting plate (24), and a fastening device (26); the mounting plate (24) is fixed to the first adapters (23); the support plate is movably arranged on the mounting plate (24); the fastening device (26) is arranged at one side of the mounting plate (24); and the fastening device (26) fixes the support plate to the mounting plate (24).

13. The gimbal platform (100) of claim 12, wherein: each of the first adapters (23) comprises a first pressing block (231) and a second pressing block (232) arranged oppositely; two circular slots (230) are formed between the first pressing block (231) and the second pressing block (232); the guide posts (12) are inserted into the circular slots (230); the first pressing block (231) and the second pressing block (232) together lock in a first screw; the first adapters (23) are fixed on the guide posts (12) when the first screw is tightly locked; and the first adapters (23) slide on the guide posts (12) in a lengthwise direction of the guide posts (12) when the first screw is released,
wherein preferably a wrench (243) is fixedly arranged on a nut of the first screw.

14. The gimbal platform (100) of claim 8, wherein: the gimbal platform (100) further comprises a driving part (40b) and a holding part (60); the driving part (40b) is arranged between the connecting plate (55) and the holding part (60); and the driving part (40b) drives the rotation of the translation axis assembly (50).

15. The gimbal platform (100) of claim 14, wherein: the holding part (60) is in the shape of a bent rod; the holding part (60) comprises a first connecting part (601), a first supporting part (602), and a hand-held part (603); the first supporting part (602) is a rod member; the first connecting part (601) is fixedly connected to the geometrical center of the first supporting part (602); and the first connecting part (601) is connected to the driving part (40b),
wherein further preferably:
- the hand-held part (603) comprises two cylindrical handgrips, and the hand-held part (603) is fixed to both ends of the first supporting part (602), or
- the holding part (60) is provided with a handle fixed to one side of the first supporting part (602) and opposite the first connecting part (601).

## Patentansprüche

1. Translationsachsenanordnung (50), die Folgendes umfasst:
einen Stützarm (41, 42, 53);
eine Verbindungsplatte (55) und
eine Schwerpunkteinstellvorrichtung (58), die zwischen dem Stützarm (41, 42, 53) und der Verbindungsplatte (55) verbunden ist, wobei:
eine Position des Stützarms (41, 42, 53) an der Verbindungsplatte (55) von der Schwerpunkteinstellvorrichtung (58) eingestellt wird, um den Schwerpunkt der Translationsachsenanordnung (50) einzustellen;
die Schwerpunkteinstellvorrichtung (58) eine Verriegelungs- und Befestigungsanordnung (584) umfasst, die bewirkt, dass der Stützarm (41, 42, 53) und die Verbindungsplatte (55) während einer Einstellung des Schwerpunkts lose sitzen, und die bewirkt, dass die Verbindungsplatte (55) und der Stützarm (41, 42, 53) nach der Einstellung des Schwerpunkts fest halten,
wobei: der Stützarm (41, 42, 53) mit einem Durchdringungsloch (530), das die Verbindungsplatte (55) verbindet, und einem Verriegelungsloch (533) in Kommunikation mit dem Durchdringungsloch (530) versehen ist; **dadurch gekennzeichnet, dass**
nach der Einstellung des Schwerpunkts die Verriegelungs- und Befestigungsanordnung (584) die Größe des Verriegelungslochs (533) reduziert, um den Stützarm (41, 42, 53) fest im Durchdringungsloch (530) zu halten.

2. Translationsachsenanordnung (50) nach Anspruch 1,
wobei die Schwerpunkteinstellvorrichtung (58) dazu ausgelegt ist, die Verriegelungs- und Befestigungsanordnung (584) freizugeben, derart, dass die Größe des Verriegelungslochs (533) vergrößert wird, um es zu ermöglichen, dass die Verbindungsplatte (55) und der Stützarm (41, 42, 53) lose sitzen.

3. Translationsachsenanordnung (50) nach Anspruch 1, wobei die Verriegelungs- und Befestigungsanordnung (584) eine Auflage (5841, 42, 53), einen ersten Schraubenschlüssel (5843), einen Stift (5844) und einen Fixierbolzen (5845) umfasst, die Auflage (5841, 42, 53) mit einem Durchführungsloch (5847) versehen ist; die Auflage (5841, 42, 53) auf der Seite des Stützarms (41, 42, 53) in der Nähe des Verriegelungslochs (533) angeordnet ist; der Stift (5844) in einem ersten Durchgangsloch im ersten Schraubenschlüssel (5843) angeordnet ist; der erste Schraubenschlüssel (5843) sich relativ zum Stift (5844) dreht; der Stift (5844) mit einem zweiten Durchgangsloch (5850) versehen ist und der Fixierbolzen (5845) sequenziell durch das zweite Durchgangsloch (5850) und das Durchführungsloch (5847) geht und dann in eine Gewindeverbindung mit einem Gewindeloch (5848), das in der Verbindungsplatte (55) bereitgestellt ist, kommt,
vorzugsweise wobei die Auflage (5841, 42 53) aus Polyoxymethylen besteht
oder vorzugsweise wobei das Gewindeloch (5848) in der Verbindungsplatte (55) durch das Verriegelungsloch (533) läuft.

4. Translationsachsenanordnung (50) nach Anspruch 1, wobei: die Schwerpunkteinstellvorrichtung (58) ferner eine Leitspindel (582) und ein Bewegungselement (583), das drehbar und bewegbar an der Leitspindel (582) angeordnet ist, umfasst; das Bewegungselement (583) im Durchdringungsloch (530) aufgenommen und fest mit dem Stützarm (41, 42, 53) verbunden ist; die Verbindungsplatte (55) im Bewegungselement (583) angeordnet ist, ein Lager (581) in der Verbindungsplatte (55) angeordnet ist; ein Gewindeloch (5848) am Bewegungselement (583) bereitgestellt ist; die Leitspindel (582) in einer Gewindeverbindung mit dem Gewindeloch (5848) im Bewegungselement (583) ist und ein Ende der Leitspindel (582) vom Lager (581) umhüllt ist.

5. Translationsachsenanordnung (50) nach Anspruch 4, wobei: das Durchdringungsloch (530) ein erstes Aufnahmeloch (531) einer Rechteckform und ein zweites Aufnahmeloch (532) einer Kreisbogenform umfasst; das erste Aufnahmeloch (531) mit dem zweiten Aufnahmeloch (532) in Kommunikation steht; die Verbindungsplatte (55) ein erstes Führungsteil (551) und ein zweites Führungsteil (552), das mit dem ersten Führungsteil (551) verbunden ist, umfasst; das erste Führungsteil (551) sich auf einer Außenseitenfläche des zweiten Führungsteils (552) erstreckt und relativ zum zweiten Führungsteil (552) vorsteht; das zweite Führungsteil (552) an das zweite Aufnahmeloch (532) angeglichen ist, das Bewegungselement (583) an das erste Aufnahmeloch (531) angeglichen ist und das Bewegungselement (583) fest im ersten Aufnahmeloch (531) angeordnet ist.

6. Translationsachsenanordnung (50) nach Anspruch 5, wobei: das Bewegungselement (583) ein erstes Bewegungsteil (5831), ein zweites Bewegungsteil (5832), das mit dem ersten Bewegungsteil (5831) verbunden ist, und ein Führungsteil (5833) umfasst; das zweite Bewegungsteil (5832) sich auf beiden Seiten des ersten Bewegungsteils (5831) erstreckt; das zweite Bewegungsteil (5832) das erste Führungsteil (551) klemmt und das Gewindeloch (5848) im Bewegungselement (583) am Führungsteil (5833) bereitgestellt ist,
wobei ferner vorzugsweise eine Mittelachse des Gewindelochs (5848) im Bewegungselement (583) im Wesentlichen parallel zu einer Längsrichtung der Leitspindel (582) verläuft.

7. Translationsachsenanordnung (50) nach Anspruch 1, wobei: die Translationsachsenanordnung (50) ferner eine Antriebsvorrichtung (44, 54) und eine Batterie (57) umfasst; die Antriebsvorrichtung (44, 54) an einem Ende des Stützarms (41, 42, 53) angeordnet ist und die Batterie (57) am Stützarm (41, 42, 53) angeordnet ist,
wobei vorzugsweise eine Statoranordnung der Antriebsvorrichtung (44, 54) direkt in den Stützarm (41, 42, 53) aufgenommen ist.

8. Kardanplattform (100) zum Tragen einer Bildgebungsvorrichtung (200), wobei die Kardanplattform (100) Folgendes umfasst:
eine Nickachsenanordnung (10); eine Rollachsenanordnung (40), die mit der Nickachsenanordnung (10) in Schwenkverbindung ist und die die Drehung der Nickachsenanordnung (10) antreibt; und eine Translationsachsenanordnung (50) nach einem der vorhergehenden Ansprüche, die mit der Rollachsenanordnung (40) in Schwenkverbindung ist und die die Drehung der Rollachsenanordnung (40) antreibt, die Translationsachsenanordnung (50).

9. Kardanplattform (100) nach Anspruch 8, wobei die Kardanplattform (100) ferner eine Stützanordnung (20) umfasst, die bewegbar an der Nickachsenanordnung (10) angeordnet ist und die Bildgebungsvorrichtung (200) trägt.

10. Kardanplattform (100) nach Anspruch 8, wobei die Nickachsenanordnung (10) zwei erste Holme (11), zwei Führungspfosten (12) und zwei erste Positionsverriegelungsvorrichtungen (13) umfasst; die Führungspfosten (12) im Wesentlichen senkrecht zu den zwei ersten Holmen (11) verlaufen und sich die zwei Führungspfosten (12) durch die ersten Positionsverriegelungsvorrichtungen (13) in die Längsrichtung der ersten Holme (11) bewegen.

11. Kardanplattform (100) nach Anspruch 10, wobei: die erste Positionsverriegelungsvorrichtung (13) einen Bund (13a) umfasst, der mit einem Rastloch (130) und zwei Aufnahmelöchern (132), die jeweils auf zwei Seiten des Rastlochs (130) angeordnet sind, versehen ist; die Axialrichtung des Rastlochs (130) im Wesentlichen senkrecht zur Axialrichtung des Aufnahmelochs (132) verläuft, die Form und die Größe des Rastlochs (130) der Form und der Größe des ersten Holms (11) entsprechen; die zwei ersten Holme (11) jeweils im Rastloch (130) umhüllt sind und jedes der Aufnahmelöcher (132) ein Ende des Führungspfostens (12) aufnimmt, derart, dass die zwei Führungspfosten (12) im Wesentlichen parallel zueinander angeordnet sind,
ferner wobei vorzugsweise:
die ersten Positionsverriegelungsvorrichtungen (13) ferner ein Verriegelungs- und Befestigungselement (134) umfassen und die Montagepositionen der zwei Führungspfosten (12) an den ersten Holmen (11) durch Lösen oder Festziehen des Verriegelungs- und Befestigungselements (134) eingestellt werden.

12. Kardanplattform (100) nach Anspruch 9, wobei: die Stützanordnung (20) zwei erste Adapter (23), die gleitbar an den Führungspfosten (12) angeordnet sind, eine Montageplatte (24) und eine Befestigungsvorrichtung (26) umfasst; die Montageplatte (24) am ersten Adapter (23) fixiert ist; die Stützplatte bewegbar auf der Montageplatte (24) angeordnet ist; die Befestigungsvorrichtung (26) auf einer Seite der Montageplatte (24) angeordnet ist und die Befestigungsvorrichtung (26) die Stützplatte an der Montageplatte (24) fixiert.

13. Kardanplattform (100) nach Anspruch 12, wobei: jeder der ersten Adapter (23) einen ersten Druckblock (231) und einen zweiten Druckblock (232), die gegenüber angeordnet sind, umfasst; zwei Kreisschlitze (230) zwischen dem ersten Druckblock (231) und dem zweiten Druckblock (232) gebildet sind; die Führungspfosten (12) in die Kreisschlitze (230) eingesetzt sind; der erste Druckblock (231) und der zweite Druckblock (232) zusammen in einer ersten Schraube verriegeln; die ersten Adapter (23) an den Führungspfosten (12) fixiert sind, wenn die erste Schraube fest verriegelt ist; und die ersten Adapter (23) in einer Längsrichtung der Führungspfosten (12) auf den Führungspfosten (12) gleiten, wenn die erste Schraube gelöst ist,
wobei vorzugsweise ein Schraubenschlüssel (243) fest auf einer Mutter der ersten Schraube angeordnet ist.

14. Kardanplattform (100) nach Anspruch 8, wobei: die Kardanplattform (100) ferner ein Antriebsteil (40b) und ein Halteteil (60) umfasst; das Antriebsteil (40b) zwischen der Verbindungsplatte (55) und dem Halteteil (60) angeordnet ist und das Antriebsteil (40b) die Drehung der Translationsachsenanordnung (50) antreibt.

15. Kardanplattform (100) nach Anspruch 14, wobei: das Halteteil (60) die Form einer gebogenen Stange aufweist; das Halteteil (60) ein erstes Verbindungsteil (601), ein erstes Stützteil (602) und ein handgehaltenes Teil (603) umfasst; das erste Stützteil (602) ein Stangenelement ist; das erste Verbindungsteil (601) fest mit der geometrischen Mitte des ersten Stützteils (602) verbunden ist und das erste Verbindungsteil (601) mit dem Antriebsteil (40b) verbunden ist,
ferner wobei vorzugsweise:
- das handgehaltene Teil (603) zwei zylindrische Handgriffe umfasst und das handgehaltene Teil (603) an beiden Enden des ersten Stützteils (602) fixiert ist oder
- das Halteteil (60) mit einem Griff versehen ist, der an einer Seite des ersten Stützteils (602) und gegenüber dem ersten Verbindungsteil (601) fixiert ist.

## Revendications

1. Ensemble axe de translation (50) comprenant :
un bras de support (41, 42, 53) ;
une plaque de raccordement (55) ; et
un dispositif d'ajustement de centre de gravité (58) raccordé entre le bras de support (41, 42, 53) et la plaque de raccordement (55), dans lequel :
une position du bras de support (41, 42, 53) sur la plaque de raccordement (55) est ajustée par le dispositif d'ajustement de centre de gravité (58) pour ajuster le centre de gravité de l'ensemble axe de translation (50) ;
le dispositif d'ajustement de centre de gravité (58) comprend un ensemble de verrouillage et de fixation (584) qui amène le bras de support (41, 42, 53) et la plaque de raccordement (55) à être ajustés sans serrage pendant un ajustement du centre de gravité, et qui amène la plaque de raccordement (55) et le bras de support (41, 42, 53) à tenir de manière serrée après l'ajustement du centre de gravité,
dans lequel : le bras de support (41, 42, 53) est prévu avec un trou de pénétration (530) raccordant la plaque de raccordement (55) et un trou de verrouillage (533) en communication avec le trou de pénétration (530) ; **caractérisé en ce que**, après l'ajustement du centre de gravité, l'ensemble de verrouillage et d'ajustement (584) réduit la taille du trou de verrouillage (533) pour maintenir le bras de support (41, 42, 53) fermement dans le trou de pénétration (530).

2. Ensemble axe de translation (50) selon la revendication 1,
dans lequel le dispositif d'ajustement de centre de gravité (58) est configuré pour libérer l'ensemble de verrouillage et de fixation (584), de sorte que la taille du trou de verrouillage (533) est agrandie pour permettre à la plaque de raccordement (55) et au bras de support (41, 42, 53) d'être ajustés sans serrage.

3. Ensemble axe de translation (50) selon la revendication 1, dans lequel l'ensemble de verrouillage et de fixation (584) comprend un coussinet (5841, 42, 53), une première clé (5843), une broche (5844) et un boulon de fixation (5845) ; le coussinet (5841, 42, 53) est prévu avec un trou d'interconnexion (5847) ; le coussinet (5841, 42, 53) est agencé sur le côté du bras de support (41, 42, 53) à proximité du trou de verrouillage (533) ; la broche (5844) est agencée dans un premier trou débouchant dans la première clé (5843) ; la première clé (5843) tourne par rapport à la broche (5844) ; la broche (5844) est prévue avec un second trou débouchant (5850) ; et le boulon de fixation (5845) passe à travers le second trou débouchant (5850) et le trou d'interconnexion (5847) de manière séquentielle et est ensuite raccordé par filetage avec un trou fileté (5848) prévu dans la plaque de raccordement (55),
dans lequel, de préférence le coussinet (5841, 42, 53) est réalisé à partir de polyoxyméthylène,
ou bien dans lequel de préférence le trou fileté (5848) dans la plaque de raccordement (55) s'étend à travers le trou de verrouillage (533).

4. Ensemble axe de translation (50) selon la revendication 1, dans lequel : le dispositif d'ajustement de centre de gravité (58) comprend en outre une vis mère (582) et un élément mobile (583) agencé en rotation et de manière mobile sur la vis mère (582) ; l'élément mobile (583) est reçu dans le trou de pénétration (530) et raccordé de manière fixe au bras de support (41, 42, 53) ; la plaque de raccordement (55) est agencée dans l'élément mobile (583) ; un palier (581) est agencé dans la plaque de raccordement (55) ; un trou fileté (5848) est prévu sur l'élément mobile (583) ; la vis mère (582) est raccordé par filetage avec le trou fileté (5848) dans l'élément mobile (583) ; et une extrémité de la vis mère (582) est gainée dans le palier (581).

5. Ensemble axe de translation (50) selon la revendication 4, dans lequel : le trou de pénétration (530) comprend un premier trou de réception (531) d'une forme rectangulaire et un second trou de réception (532) en forme d'arc de cercle ; le premier trou de réception (531) est en communication avec le second trou de réception (532) ; la plaque de raccordement (55) comprend une première partie de guidage (551) et une seconde partie de guidage (552) raccordée à la première partie de guidage (551) ; la première partie de guidage (551) s'étend sur une surface latérale externe de la seconde partie de guidage (552) et fait saillie par rapport à la seconde partie de guidage (552) ; la seconde partie de guidage (552) correspond au second trou de réception (532) ; l'élément mobile (583) correspond au premier trou de réception (531) ; et l'élément mobile (583) est agencé, de manière fixe, dans le premier trou de réception (531).

6. Ensemble axe de translation (50) selon la revendication 5, dans lequel : l'élément mobile (583) comprend une première partie mobile (5831), une seconde partie mobile (5832) raccordée à la première partie mobile (5831), et une partie de guidage (5833) ; la seconde partie mobile (5832) s'étend des deux côtés de la première partie mobile (5831) ; la seconde partie mobile (5832) serre la première partie de guidage (551) ; et le trou fileté (5848) dans l'élément mobile (583) est prévu au niveau de la partie de guidage (5833),
dans lequel, en outre, de préférence, un axe central du trou fileté (5848) dans l'élément mobile (583) est sensiblement parallèle au sens de la longueur de la vis mère (582).

7. Ensemble axe de translation (50) selon la revendication 1, dans lequel : l'ensemble axe de translation (50) comprend en outre un dispositif d'entraînement (44, 54) et une batterie (57) ; le dispositif d'entraînement (44, 54) est agencé au niveau d'une extrémité du bras de support (41, 42, 53) ; et la batterie (57) est agencée sur le bras de support (41, 42, 53),
dans lequel de préférence un ensemble de stator du dispositif d'entraînement (44, 54) est directement reçu dans le bras de support (41, 42, 53).

8. Plateforme à cardan (100) pour porter un dispositif d'imagerie (200), la plateforme à cardan (100) comprenant : un ensemble axe de tangage (10) ; un ensemble axe de roulis (40) en raccordement de pivot avec l'ensemble axe de tangage (10) et qui entraîne la rotation de l'ensemble axe de tangage (10) ; et un ensemble axe de translation (50) selon l'une des revendications précédentes, en raccordement de pivot avec l'ensemble axe de roulis (40) et qui entraîne la rotation de l'ensemble axe de roulis (40), l'ensemble axe de translation (50).

9. Plateforme à cardan (100) selon la revendication 8, dans laquelle la plateforme à cardan (100) comprend en outre un ensemble de support (20) agencé, de manière mobile, au niveau de l'ensemble axe de tangage (10) et portant le dispositif d'imagerie (200).

10. Plateforme à cardan (100) selon la revendication 8, dans laquelle l'ensemble axe de tangage (10) comprend deux premiers piliers (11), deux montants de guidage (12) et deux premiers dispositifs de verrouillage de position (13) ; les montants de guidage (12) sont sensiblement perpendiculaires aux deux premiers piliers (11) ; et les deux montants de guidage (12) se déplacent dans le sens de la longueur des premiers piliers (11) grâce aux dispositifs de verrouillage de position (13).

11. Plateforme à cardan (100) selon la revendication 10, dans laquelle: le premier dispositif de verrouillage de position (13) comprend un collier (13a) qui est prévu avec un trou d'encliquetage (130) et deux trous de réception (132) respectivement agencés sur des côtés du trou d'encliquetage (130) ; la direction axiale du trou d'encliquetage (130) est sensiblement perpendiculaire à la direction axiale du trou de réception (132) ; la forme et la taille du trou d'encliquetage (130) correspondent à la forme et à la taille du premier pilier (11) ; les deux premiers piliers (11) sont respectivement gainés dans le trou d'encliquetage (130) ; et chacun des trous de réception (132) reçoit une extrémité du montant de guidage (12), de sorte que les deux montants de guidage (12) sont agencés de manière sensiblement parallèle entre eux,
dans laquelle en outre de préférence :
les premiers dispositifs de verrouillage de position (13) comprennent en outre un élément de verrouillage et de fixation (134) ; et les positions de montage des deux montants de guidage (12) sur les premiers piliers (11) sont ajustées en libérant ou en serrant l'élément de verrouillage et de fixation (134).

12. Plateforme à cardan (100) selon la revendication 9, dans laquelle : l'ensemble de support (20) comprend deux premiers adaptateurs (23) agencés, de manière coulissante, sur les montants de guidage (12), une plaque de montage (24) et un dispositif de fixation (26) ; la plaque de montage (24) est fixée sur les premiers adaptateurs (23) ; la plaque de support est agencée, de manière mobile, sur la plaque de montage (24) ; le dispositif de fixation (26) est agencé au niveau d'un côté de la plaque de montage (24) ; et le dispositif de fixation (26) fixe la plaque de support sur la plaque de montage (24).

13. Plateforme à cardan (100) selon la revendication 12, dans laquelle : chacun des premiers adaptateurs (23) comprime n premier bloc de pression (231) et un second bloc de pression (232) agencés à l'opposé ; deux fentes circulaires (230) sont formées entre le premier bloc de pression (231) et le second bloc de pression (232) ; les montants de guidage (12) sont insérés dans les fentes circulaires (230) ; le premier bloc de pression (231) et le second bloc de pression (232) verrouillent ensemble une première vis ; les premiers adaptateurs (23) sont fixés sur les montants de guidage (12) lorsque la première vis est fermement verrouillée ; et les premiers adaptateurs (23) coulissent sur les montants de guidage (12) dans le sens de la longueur des montants de guidage (12) lorsque la première vis est libérée,
dans laquelle de préférence une clé (243) est agencée, de manière fixe, sur un écrou de la première vis.

14. Plateforme à cardan (100) selon la revendication 8, dans laquelle : la plateforme à cardan (100) comprend en outre une partie d'entraînement (40b) et une partie de maintien (60) ; la partie d'entraînement (40b) est agencée entre la plaque de raccordement (55) et la partie de maintien (60) ; et la partie d'entraînement (40b) entraîne la rotation de l'ensemble axe de translation (50).

15. Plateforme à cardan (100) selon la revendication 14, dans laquelle : la partie de maintien (60) se présente sous la forme d'une tige pliée ; la partie de maintien (60) comprend une première partie de raccordement (601), une première partie de support (602) et une pièce à main (603) ; la première partie de support (602) est un élément de tige ; la première partie de raccordement (601) est raccordée de manière fixe au centre géométrique de la première partie de support (602) ; et la première partie de raccordement (601) est raccordée à la partie d'entraînement (40b),
dans laquelle en outre de préférence :
la pièce à main (603) comprend deux poignées cylindriques, et la pièce à main (603) est fixée aux deux extrémités de la première partie de support (602), ou bien
la partie de maintien (60) est prévue avec une poignée fixée à une extrémité de la première partie de support (602) et à l'opposé de la première partie de raccordement (601).
